# EUROPÄISCHE PATENTSCHRIFT

(11) **EP 3 056 994 B1**
(45) Veröffentlichungstag und Bekanntmachung des Hinweises auf die Patenterteilung: **13.06.2018**
(21) Anmeldenummer: 16000315.8
(22) Anmeldetag: 09.02.2016
(51) Int. Cl.: G06F 11/36, G05B 13/02, G06N 5/02

(54) **VORRICHTUNG UND VERFAHREN ZUR ERFASSUNG, ÜBERPRÜFUNG UND SPEICHERUNG VON PROZESSDATEN AUS MINDESTENS ZWEI PROZESSSCHRITTEN**
DEVICE AND METHOD FOR DETECTING, CHECKING AND STORING PROCESS DATA FROM AT LEAST TWO PROCESS STEPS
DISPOSITIF ET PROCEDE DE DETECTION, DE VERIFICATION ET DE MEMORISATION DE DONNEES DE PROCESSUS PROVENANT AU MOINS DE DEUX ETAPES DE PROCESSUS

(30) Priorität: 10.02.2015 DE 102015001567
(43) Veröffentlichungstag der Anmeldung: 17.08.2016
(73) Patentinhaber: Karlsruher Institut für Technologie, 76131 Karlsruhe (DE)
(72) Erfinder: El-Haji, Mohanad, 76137 Karlsruhe (DE); Freudenmann, Thomas, 76137 Karlsruhe (DE)
(74) Vertreter: Weddigen, Andreas

(56) Entgegenhaltungen:
- EP-A2- 1 279 078
- WO-A1-2008/104136
- US-A- 5 629 878
- REMBOLD U: "METHODEN DER KUENSTLICHEN INTELLIGENZ IN DER INDUSTRIELLEN FERTIGUNG. \GRUNDBESTANDTEILE UND ENTWICKLUNG EINES EXPERTENSYSTEMS (TEIL 1)", TR TRANSFER: EUROPAEISCHE INDUSTRIE- UND HANDELSZEITUNG, HALLWAG AG, CH, Bd. 84, Nr. 13, 27. März 1992 (1992-03-27) , Seiten 38-44,47,49, XP000288161, ISSN: 1023-0823

## Beschreibung

Die Erfindung betrifft eine Vorrichtung und ein Verfahren zur Erfassung, Überprüfung und Speicherung von Zustandsdaten aus mindestens vier Prozessschritten gemäß den Patentansprüchen 1 und 5.

Die Erfindung unterstützt im Rahmen einer Systemanalyse die Validierung (Konzeptionelle Bestätigung) und Optimierung (konzeptionelle. Verbesserung) von industriellen Produkten oder industriellen Prozessen während eines Produkt- bzw. Prozessentstehungsprozesses mit technischen Mitteln. Insbesondere beinhaltet dies eine Analyse unter Heranziehung möglichst aller relevanter Anforderungen an das Produkt oder der Prozess sowie Erfahrungswerten hinsichtlich ihrer Realisierbarkeit, ihres Sinns und ihrer Vollständigkeit, wobei die Erfahrungswerte objektiven Kriterien folgen.

Damit ergeben sich insbesondere folgende Vorteile und Synergieeffekte :
1. Effiziente Kommunikation interdisziplinärer Entwicklungsteams auf der Basis des gesammelten Expertenwissens,
2. Definition von Experimenten mit Versuchsplan, virtuellen oder physischen Prototypen des Produkts und einer dazugehörigen Prüfumgebung auf Basis des Expertenwissens,
3. Verwendung von nur konsistenten Prüfsystemen oder Simulationsmodellen im Experiment und selektive Erfassung von nur plausiblen Messdaten hieraus,
4. Treffen von statistisch abgesicherten Entscheidungen, basierend auf den Ergebnissen des Experiments während des Entwicklungsprozesses sowie deren Erfassung für nachfolgende Projekte.

Aktuell sind Ansätze und Lösungen für eine Durchführung von Systemanalysen (z. B. Erstellung eines Fehlerbaums, FMEA usw.), ein Management des Produktlebenszyklusses, eine Automatisierung von Prüfstanden und für eine Planung bzw. Erstellung und Auswerten von statistischen Versuchsplänen bekannt.

DE 10 2008 062 830 B3 offenbart eine Vorrichtung zum Suchen, Speichern und Darstellen von Information über vorgebebare Baumstrukturen und entsprechende Knoten. Eine Information ist über eine entsprechende Zuordnungseinheit such- und darstellbar.

DE 43 33 286 A1 offenbart ein automatisiertes Verfahren zur Diagnose einer Störung an einer Maschine unter Verwendung eines computerbasierten Expertensystems, wobei aufgrund generischer Regeln Störungen identifiziert werden können. Die Regelinformation erhält das Expertensystem aus einer physikalisch getrennten relationalen Datenbank.

DE 197 51 273 A1 offenbart ein Verfahren zum computergestützten Erstellen und Handhaben einer auf Produkt- oder Prozesslebenszyklen basierenden technischen Datenbank zur Verwendung in einem modularen Diagnose-, Informations- und/oder Ausbildungs- oder Trainingssystems. Durch eine flexible Struktur der Datenbank werden alle relevanten Daten für unterschiedliche Prozess- und Produktmodelle zu einem frühen Zeitpunkt erfassbar und aktualisierbar. Im Diagnose-, Ausbildungs- oder Trainingsmodul werden hierbei nur produktneutrale Befehlssätze abgelegt, weshalb diese auf unterschiedliche prozess- und produktspezifische Daten aus der Datenbank angewandt werden können. Ferner gewährleistet das Verfahren, dass alle speicherplatzintensiven spezifischen Prozess- und Produktinformationen in einer zentralen Datenbank gespeichert werden.

DE 10 2006 034 477 A1 offenbart ein Verfahren zur Verwaltung von Wissen über Steuergeräte, bei dem diagnoserelevante Information erfasst und zur Verfügung gestellt wird. Die Information über das Steuergerät wird jeder Station im Lebenszyklus des Steuergeräts zur Verfügung gestellt, wobei die erfasste Information mit anderen Ereignissen des Steuergeräts zugeordnet werden. Somit ist auch die Information aus dem Service für die zukünftige Entwicklung von Steuergeräten über Flotten und Generationen hinweg nutzbar.

US 5.629.878 A offenbart ein wissensbasiertes Testsystem, um spezifische Testfälle für das Testen von Software zu erzeugen. Dabei wird vermieden, dass redundante Testfälle entworfen werden, wobei alle relevanten Testfälle mit den dazugehörigen Testergebnissen in einer gemeinsamen Datenbank abgelegt werden.

US 7.272.750 B2 offenbart ein Expertensystem für intelligentes Testen von Prüflingen (Geräten oder Softwarekomponenten) mit messbaren Eingangs- und Ausgangssignale. Hierbei werden die Ausgangssignale (Analog, Digital usw.) des Prüflings in Echtzeit eingelesen, analysiert und dynamisch in neue Regeln im Expertensystem eingesetzt. Durch das Expertensystem werden die erwarteten Ausgangsignale von einem oder mehreren Prüflingen mit den tatsächlichen Werten verglichen. Auch sind Signale von verschiedenen Prüflingen untereinander vergleichbar.

Durch eine fortschreitende Globalisierung der Unternehmen und Entwicklungskapazitäten wird ein persönlicher Austausch von Wissen signifikant erschwert. Außerdem trägt eine hohe Fluktuation von Mitarbeitern im Unternehmen dazu bei, dass Unternehmen persönliches Wissen über Produkt- und Prozessmodelle von Mitarbeitern verloren geht. Ebenfalls ist bekannt, dass die Menge an zu verwaltender Information in Unternehmen stetig wächst. Information kann in Form von strukturierten Daten in einer Datenbank vorliegen oder in Form von Dokumenten mit ggf. entsprechenden Metadaten in einer Datenbank bzw. auf einem lokalen Rechner gespeichert sein. Solange die Information in einer Datenbank abgespeichert ist, kann diese über bestimmte Suchbegriffe global aufgerufen werden. Allerdings mit der Einschränkung, dass beim Ablegen der Information bereits die richtigen Suchbegriffe für das Finden der Information bekannt sein müssen, um ein hilfreiches Ergebnis zu erhalten. Durch das Abspeichern von Dokumenten oder das Speichern von Information auf dem lokalen Rechner wird der Speicherplatzbedarf deutlich erhöht.

Des Weiteren führt es zu Problemen bei der Aktualisierung und Versionierung der vorhandenen Information, da dies nicht mehr ohne weiteres zentral erfolgen kann.

Die vorgenannten Lösungen bzw. Systeme umfassen jedoch nur spezifische Lösungen für bestimmte Aufgaben während einer Validierung, beinhalten jedoch keinen allgemeinen Ansatz, der einen durchgängigen Validierungsprozess, umfassend eine Vorbereitung, eine Durchführung und eine Auswertung eines Experiments, unterstützen könnte. Dies umfasst auch eine Findung von statistisch abgesicherten Entscheidungen in Kontext der Validierung. Weiterhin ist ein Zugriff auf kontextsensitive Informationen aus vorangegangenen Schritten sowie eine Bereitstellung dieser für nachfolgende Schritte nicht möglich.

Davon ausgehend liegt eine **Aufgabe der Erfindung** darin, eine Vorrichtung und ein Verfahren zur Erfassung, Überprüfung und Speicherung von Zustandsdaten aus mindestens vier Prozessschritten vorzuschlagen, die für einen durchgängigen Völidierungsprozess geeignet sind.

Die Aufgabe wird durch eine Vorrichtung und ein Verfahren mit den Merkmalen der Ansprüche 1 bzw. 5 gelöst. Hierauf bezogene Unteransprüche geben vorteilhafte Ausgestaltungen wieder.

Zur Lösung der Aufgabe wird eine Vorrichtung zur Erfassung, Überprüfung und Speicherung von Zustandsdaten aus mindestens vier Prozessschritten gemäß Anspruch 1 vorgeschlagen.

Ebenso umfasst die Lösung ein Verfahren zur Erfassung, Überprüfung und Speicherung von Zustandsdaten aus mindestens vier Prozessschritten nach Anspruch 5, vorzugsweise unter Nutzung der vorgenannten Vorrichtung.

Prozessdaten sind erfass- oder messbare Daten, erfindungsgemäß Zustandsdaten (Ist-Zustand) aus dem mit den vorgenannten Prozessschritten zu gestaltenden Prozess oder Produkten. Die Zustandsdaten sind folglich vorzugsweise geometrische, thermodynamische, stoffliche und/oder zeitliche Daten. Bei einem Produkt sind dies z. B. nicht nur die direkt am Produkt erfassbaren Größen wie z. B. Abmessungen, Gewicht, Werkstoffdaten, Festigkeiten, Kenngrößen etc., sondern insbesondere auch konstruktive und betriebliche Auslegungsdaten wie Sicherheitsfaktoren bei einer Dimensionierung, konstruktive Sollbruchstellen, Betriebs- oder Verschleißeigenschaften im Zusammenspiel mit anderen Komponenten bei bestimmten Umgebungseinflüssen, Belastungsprofile etc.. Bei einem Prozess umfassen die dies insbesondere zeitliche Abfolgen von Prozessschritten sowie Prozessparameter oder äußere Einflüsse auf den Prozess.

Die Prozessschritte umfassen insbesondere die Optimierungsschritte oder ein Teil dieser Schritte, die bei einer Entwicklung eines Produktes oder eines Prozesses tatsächlich durchlaufen werden oder werden sollen. Weitere Prozessdaten umfassen optional auch Bewertungen oder Zielvorgaben von zu erwarteten Produkteigenschaften und vorgegebenen Anforderungen z. B. eines Kunden, Auftraggebers oder Einsatzzwecks. Die Erfindung sieht vor, dass die Prozessdaten und das Expertenwissen in graphischen Modellen dargestellt werden. Ein graphisches Modell umfasst die Zustandsdaten des Produkts in Wechselwirkung mit anderen Komponenten unter Umgebungseinflüsse, wobei das Expertenwissen während des Modellierens in semantischen Zusammenhang (d.h. in Bezug zu anderem Expertenwissen und der aktuellen Aufgabenstellung) gebracht wird. Das Modell des Expertenwissens stellt sich als Graph dar, wobei durch zwei Objekte die System-Struktur und die Zustandsdaten, als weitere Spezifizierung der Systemstruktur, beschrieben werden. Durch entsprechende Kanten werden in dem Graph die Objekten in rechenrverständliche Beziehungen gesetzt. Hierbei ist eine n:m-Beziehung möglich. Aus der graphischen Visualisierung der Beziehungen zwischen den Objekten lässt sich direkt die Art und Weise der Speicherung des Wissens in der in Speichereinheit ableiten.

Unter einer Erfassung von Prozessdaten versteht man eine Messung der vorgenannten Zustandsdaten mit Messmitteln, vorzugsweise physikalischen oder chemischen Messaufnehmern oder Messsystemen wie z. B. - nicht abschließend aufgelistet - Messgeräte zur Bestimmung von Längen, Flächen oder Volumen, chemische oder thermische Analysesysteme für Stoffe oder chemische Reaktionen, mechanische und/oder thermische Prüfmaschinen, Zeitmess- und Zeiterfassungsysteme. Die Erfassung umfasst auch eine Eingabe von Auslegungsdaten und sonstige nicht direkt messbaren Daten wie konstruktive Daten, Dimensionierungen, betriebliche Auslegungen z. B. im Zusammenspiel mit anderen Komponenten, Prozessabläufe, Algorithmen, wirtschaftliche Daten wie Materialpreise, errechnete Werte wie Lebensdauern oder aus Modellbetrachtungen, Simulationsberechnungen, Versuchsdaten aus Grundlagenuntersuchungen (z. B. zur insbesondere mechanischen oder thermischen Materialermüdung, Festigkeiten, Verschleißverhalten, Materialverträglichkeit, Korrosion etc.).

Ein wesentliches Merkmal umfasst den verfahrensgesteuerten Informationsfilter, durch den Information kontextsensitiv zusammengeführt werden kann. Hierdurch wird Wissensmanagement im Kontext einer Validierung ermöglicht und Antworten auf nicht gestellte Fragen können während den einzelnen Verfahrensschritten gegeben werden.

Es folgt eine Einspeisung der Prozessdaten je Prozessschritt in je einen Datenkreislauf. Ein Datenkreislauf durchläuft die Datenerfassung, die Informationsverarbeitungsvorrichtung für die Daten und die genannte Speichereinheit für verarbeitete Daten, dann als Expertenwissen zurück zu der Informationsverarbeitungsvorrichtung, aber auch zu anderen Datenkeisläufe geleitet werden. Wesentlich ist, dass ein Zugang des gespeicherten Expertenwissens für alle Datenkreisläufen vorgesehen ist. Folglich sind die Datenkreisläufe vorzugsweise zwischen Informationsverarbeitungsvorrichtung und Speichereinheit miteinander verknüpft, vorzugsweise über vorzugsweise elektronische Kommunikationswege zwischen den Informationsverarbeitungsvorrichtungen, wobei weiter bevorzugt die genannte Informationsverarbeitungsvorrichtungen gemeinsame Prozessrechnereinheiten aufweisen oder durch eine gemeinsame Datenverarbeitungseinheit (Informationsverarbeitungseinheit) gebildet sind.

Die Weiterleitung der Prozessdaten je Prozessschritt sowie eines gespeicherten Expertenwissens zu je einer Informationsverarbeitungsvorrichtung folgt auf einem dieser Datenkreisläufe. Vorzugsweise werden die Prozessdaten im Rahmen dieser Weiterleitung nach einer Erfassung dezentral z. B. auf einem lokalen Rechner oder einem Speicher zwischengespeichert und von dort der jeweiligen Informationsverarbeitungsvorrichtung zugeführt. Es folgt eine Verarbeitung der Prozessdaten in den Informationsverarbeitungsvorrichtungen je Prozessschritt mit dem gespeicherten Expertenwissen zu einem neuen Expertenwissen. Die Informationsverarbeitungsvorrichtungen weisen hierzu Informationsfilter auf. Erfindungsgemäß wird das Expertenwissen in ein umweltbezogenes und ein prozess- oder produktbezogenes Expertenwissen aufgeteilt. Prozess- oder produktbezogenes Expertenwissen umfasst Daten mit direktem Bezug zum Prozess bzw. Produkt. Diese sind entweder vorgegeben (.z. B. eine Materialauswahl einer Stahlfelge eines Fahrzeugrades) oder im Rahmen des Optimierungs- oder Validierungsprozesses veränderbar (z. B. Gestaltung einer Stahlfelge oder Gummimischung eines Reifen eines Fahrzeugsrads). Umweltbezogenes Expertenwissen umfasst alle Daten, die sich nicht unmittelbar auf das zu optimierende oder zu validierende Produkt oder Prozess beziehen, aber in diese Optimierung oder Validierung mit einfließen. Hierzu zählen insbesondere Daten zu Allem, was mit dem Prozess und dem Produkt in Wechselwirkung stehen, durch die Optimierung und/oder Validierung aber nicht direkt beeinflusst werden sollen oder als feste Größen vorgeben sind, z. B. die Umgebungsatmosphäre (UV-Lichteinstrahlung bei einer Materialoptimierung), wechselwirkende Komponenten der Umgebung (z. B. Straße für eine Reifenoptimierung) oder auch nicht technische Einflüsse (z. B. wirtschaftliche Rahmenbedingungen für eine Optimierung für einen Fertigungsprozess). Das Expertenwissen muss dabei in einer formalen Sprache oder einem einheitlichen Format gespeichert werden, d.h. die erfassten Prozessdaten müssen in diese einheitliche Form gebracht werden. Dies erfolgt vorzugsweise rechnergestützt mittels eines Compilers, d.h. mittels einer Übersetzung der erfassten oder eingegebenen Daten in eine Form, die von einem Computer ausführbar ist. Die genannte Übersetzung erfolgt je nach Beschaffenheit des Datensatzes noch während der Erfassung z. B. im Messsystem oder in einem Rechner, spätestens aber vorzugsweise nach einheitlichen Kriterien in den Informationsverarbeitungsvorrichtungen. Vorzugsweise erfolgt dies durch jeweils einen Compiler in der jeweiligen Informationsverarbeitungsvorrichtung. Nur so ist es mit anderem Expertenwissen, das im ungünstigen Fall (z. B. aus einem anderen Datenkreislauf hinzugefügt) in einem anderen Format vorliegt, vernetzbar und ist im Zusammenhang mit der Erfassung, Überprüfung und Speicherung von Prozessdaten aus mindestens zwei Prozessschritten, d.h. mit den darin erzeugten Prozessdaten verknüpf- und damit nutzbar. Somit ist das Expertenwissen individuell und zur richtigen Zeit ohne ggf. erforderliche zusätzliche Prozessschritte für eine Transformierung abrufbar, wodurch ein deutlicher Zeit- und Kostenvorteil erreichbar ist. Das Expertenwissen wird durch die einheitliche Form hinsichtlich ihrer Anwendbarkeit für eine Wertung nachfolgender Prozessdaten auf eine einheitliche und damit objektivierte Datenbasis gestellt.

Die Prozessdaten werden in den Informationsfiltern in den Informationsverarbeitungsvorrichtungen je prozessschritt mit dem gespeicherten Expertenwissen verglichen und nach vorgebbaren Kriterien zu einem neuen Expertenwissen gewandelt. Die Kriterien dieser Informationsfilter umfassen vorzugsweise eine Wichtung der eingehenden Daten im Vergleich zu einem bereits in einer Speichereinheit hinterlegten Expertenwissen, das über einen Datenkreislauf von der Speichereinheit zur Informationsverarbeitungsvorrichtung geleitet wird. Die Wichtung erfolgt vorzugsweise mit statistischen Algorithmen (d.h. Algorithmen, die anhand von statistischen Kenngrößen Übereinstimmungen in der Struktur der in der Speichereinheit abgelegten und neu hinzugefügten Daten ermitteln), die die eingehenden Daten mit bereits im Expertenwissen hinterlegten gleichartigen Daten vergleicht, dabei in ihrer Relevanz und ihrer Wahrscheinlichkeit bezogen auf zu erwartende Erfahrungswerte einordnet und anschließend in das bereits vorhandene Expertenwissen aufnimmt und als solches mit abspeichert. Dies umfasst auch eine Plausibilitätsprüfung von eingehenden Daten. Gleichartige Daten sind hinterlegte Daten aus gleichen, gleichartigen oder ähnlichen Prozessschritten, Versuchen, Produkten oder anderen gleichartigen Zusammenhängen und/oder Rahmenbedingungen, sondern auch allgemein Daten und Zusammenhänge aus der Technik, die bei bestimmten eingehenden Datenprofilen mit in die Wichtung einfließen. Das so neu generierte neue Expertenwissen wird in der Speichereinheit mit gespeichert und wird als gespeichertes Expertenwissen nicht nur für den jeweiligen Datenkreislauf, sondern auch für alle anderen Datenkreisläufe des der Vorrichtung zur Verfügung gestellt.

Das Expertenwissen umfasst grundsätzlich positives wie auch negatives Expertenwissen. Positives Expertenwissen umfasst bevorzugt anwendbare Daten, während negatives Expertenwissen Daten umfasst, die bei einer Auslegung eines Prozesses oder eines Produkts vermieden werden sollen.

Negatives Expertenwissen wird vorzugsweise aus einer Rückmeldung (Feedback, Erfahrungswerte) aus den Prozessschritten einer Optimierung oder Validierung generiert. Die Rückmeldung erfolgt dabei bevorzugt als eigener Prozessschritt, wobei die dabei generierten Prozessdaten auf Prozessdaten aus vorangegangenen Prozessschritten aufbauen und diese vorzugsweise mit Bewertung einer Wertungsskala von negativ bis positiv ergänzen.

Verfahren und Vorrichtung dienen dabei der Validierung und Optimierung von Produkten oder Prozessen während eines Produkt- bzw. Prozessentstehungsprozesses. Dazu ist es erforderlich, dass das Produkt oder Prozess als Ganzes oder in Teilen im späteren Einsatzbereich getestet wird. Die hierfür notwendigen Experimente werden an virtuellen oder realen Prototypen durchgeführt. Die dabei erfassten experimentellen Daten (Prozessdaten) werden anschließend in die genannten Datenkreisläufe eingegeben und in diesem zu einer Informationsverarbeitungsvorrichtung weitergeleitet. In dieser werden die Prozessdaten ausgewertet, d.h. verarbeitet und in Bezug auf ein abgespeichertes Expertenwissen bewertet.

Die vorgenannte Bewertung umfasst insbesondere die Überprüfung, ob durch die experimentell ermittelten Prozessdaten das abgespeicherte Expertenwissen bestätigt werden kann oder ob eine Unstimmigkeit vorliegt. In dem Fall der Bestätigung wird die Verlässlichkeit des in der Speichereinheit abgelegten Expertenwissens erhöht. Anderenfalls, wird automatisch darauf hingewiesen, dass das Expertenwissen nicht bestätigt werden konnte bzw. eine Wissenslücke existiert. Hieraus werden weitere Versuche zum Schließen dieser Wissenslücke abgeleitet.

Besonders vorteilhaft sind Vorrichtung und Verfahren für eine Optimierung von Prozessen wie z. B. wissenschaftliche Experimente, Produktprüfprogramme oder auch Fertigungsabläufe gleichermaßen mit einem Ablaufschema mit mehreren Teilschritten. Hierbei wird je Teilschritt ein Datenkreislauf der vorgenannten Art vorgesehen, wobei über einen Austausch von Expertenwissen insbesondere verschleppte Fehlerquellen erkannt und durch einen Austausch von Expertenwissen auch in die Wichtung vorangegangener Prozessdaten einfließt. Dabei erkannte größere Abweichungen fließen dann in konkrete Handlungsvorschläge für Anpassungen der Teilschritte ein. Für die Durchführung wird im Vorfeld eine Hypothese aufgestellt, die den vermuteten Zusammenhang zwischen Ursache und Wirkung betrifft, der im Experiment bestätigt oder widerlegt werden kann. In der Regel geschieht die Aufstellung der Hypothese implizit und ist somit nicht objektiv nachvollziehbar.

Entsprechend vorteilhaft eignet sich die Vorrichtung und Verfahren für eine Optimierung von Komponenten in einem System, wobei jede Komponente und/oder Teilkomponente des Systems über einen eigenen Datenkreislauf eingebunden ist und über einen Austausch von Expertenwissen mit den anderen Komponenten und Teilkomponenten des Systems in Wechselwirkung steht. Wie zuvor beschrieben sind diese Wechselwirkungen in Systemoptimierungen, d.h. für synergieorientierte Systemverbesserungen nutzbar.

Über die genannte Vernetzung der Datenkreisläufe erfolgt eine Vernetzung des gespeicherten und für nachfolgende Prozess- und / oder Produktoptimierung zur Verfügung stehenden Expertenwissens, der Synergien mit einschließt. Es erfolgt daraufhin vorzugsweise ein Handlungsvorschlag auf der Ebene eines Datenkreislaufes für eine entsprechende Anpassung oder Änderung eines Prozesseinzelschritts oder einer Komponente. Der Handlungsvorschlag wird zum Expertenwissen und wird nicht nur vorzugsweise angezeigt, sondern weiter bevorzugt als Expertenwissen für nachfolgende Optimierungen abgespeichert. Ein Handlungsvorschlag wird vorzugsweise bei oder überwiegender Übereinstimmung von Prozessdaten vor oder oder nach einer Wichtung der vorgenannten Weise bei nachfolgenden Prozessen erneut als Expertenwissen abgerufen und angezeigt. Aufgrund dieser Vernetzung erfolgt eine Validierung eines Prozesses oder eines Produkts als Ganzes und davon ausgehend auch der jeweils in Wechselwirkung stehenden einzelnen Prozesseinzelschritte oder Komponente. Ohne diese Vernetzung bleiben Lücken im Expertenwissen häufig verborgen und führen zu Mängel z. B. in späteren prozess- oder produktrelevanten Entscheidungen.

Durch den vorgenannten Handlungsvorschlag, der vorzugsweise in vorgenannter Weise über einen Bildschirm oder eine andere Mensch/Maschinenschnittstelle angezeigt wird, wird jedoch die Sinnhaftigkeit von Prozessdaten in Bezug zur Validierung und dem dazugehörigen Prozess oder Produkt vorzugsweise nicht automatisch durch definierte Regeln überprüft. Dies bedeutet, dass eine Umsetzung eines Handlungsvorschlag vorzugsweise erst durch eine Entscheidung, die nicht innerhalb der Vorrichtung oder des Verfahrens, sondern von außerhalb z. B. durch eine Person, ein System, durch eine Vorgabe oder einen übergeordneten Prozess generiert wird, in die Optimierung einfließt.

Eine Validierung oder eine Optimierung eines Prozesses oder einer Produkts während eines Produkt- bzw. Prozessentstehungsprozesses beginnt mit einem Ausgangslage, beispielsweise einem Konzept, vorzugsweise einer Vorüberlegung.

Als ein möglicher erster Schritt wird basierend auf den Vorüberlegungen im Rahmen einer bevorzugten Ausgestaltung ein Ablaufplan aufgestellt, der während des Prozesses manuell oder automatisiert abgearbeitet wird. Der Ablaufplan umfasst mindestens zwei, vorzugsweise alle Prozessschritte oder Prozessschrittgruppen der Optimierung oder Validierung, die vorzugsweise einzeln oder gruppenweise jeweils einem eigenen Datenkreislauf zugeordnet werden. Häufig werden hierzu auch Systemgrößen oder Parameter als Prozessdaten nicht nur erfasst, sondern nach statistischen Methoden oder Zusammenhängen auch gewichtet oder manipuliert, sodass weitere Zusammenhänge aus dem Ablaufplan identifizierbar werden. Dies bedeutet, dass der Umfang der erfassten Prozessdaten in einem Prozessschritt im Rahmen einer Ausgestaltung auch von den Prozessdaten aus anderen Prozessschritten abhängt, d.h. einen Selektionsprozess durchläuft.

Vorzugsweise erfolgt die Erstellung solcher Ablaufpläne mit anfänglichen Prozessdaten zunächst zielorientiert ohne eine Einbindung oder Berücksichtigung eines Expertenwissens. Eine Validierung oder Optimierung der Ablaufpläne erfolgt anschließend durch eine Eingabe der zunächst gewählten Prozessdaten in die Vorrichtung oder das Verfahren, wobei die die Prozessdaten mit bereits hinterlegtem Expertenwissen verglichen werden mittels daraus wie vorgenannt generierter Handlungsvorschläge anpassbar sind.

Ist noch kein Expertenwissen vorhanden, werden die Ablaufpläne und beispielhaft vorgegebene Umweltbezogene Daten als Prozessdaten vorgesehen und zunächst auch als Expertenwissen abgespeichert und anhand den Rückmeldungen als zusätzlichen Prozessschritten mit einer Wertung versehen. Ferner lassen sich Prozesse oder Produkte insgesamt oder einzelne Parameter zunächst rechnerisch simulieren und zumindest mit ebenfalls rechnerisch generierten Rückmeldungen (Erfahrungswerte) als Expertenwissen abspeichern. Das abgespeicherte Expertenwissen basiert dabei zunächst auf einem realen oder rechnerisch simulierten Prototyp. Inwieweit dieser Prototyp und die gewählte Umgebung für eine Überprüfung für eine Rückmeldung valide ist, hängt vom Zusammenhang von Ursache und Wirkung für die einzelnen Prozessdaten ab. Dieser Zusammenhang wird jedoch für die Prozessdaten außerhalb der Vorrichtung oder des Verfahrens eingeschätzt, von dort auch vorgegeben und als Expertenwissen hinterlegt.

Die im Expertenwissen enthaltenen Ursache-Wirkungszusammenhänge müssen identifiziert werden. Bevorzugt werden wiederum aufgrund von Erfahrungswerte eines Experten bestimmte charakteristische Produkteigenschaften anhand der Messdaten identifiziert und implizit bewertet. Vorzugsweise werden hierbei eine Objektivierung der Produkt- oder Prozesseigenschaften anhand der Messdaten und eine Rückführung auf die dahinterliegenden physikalischen Ursache-Wirkungszusammenhänge hergestellt und als Expertenwissen gespeichert.

Grundsätzlich lassen sich auch in der Vorrichtung oder im Rahmen des Verfahrens gespeichertes Expertenwissen durch direkte Eingabe von Daten von außerhalb der Vorrichtung oder des Verfahren vorgeben.

Die Lösung umfasst erfindungsgemäß und in vorteilhafter Weise einen verfahrensgesteuerten Informationsfilter, der für die eingangs genannten Schritte formale Regeln, Begrifflichkeiten und deren Beziehungen zueinander definiert, wodurch das Vorgehen eines erfahrenen Ingenieurs bei der Vorbereitung (Systemanalyse und Experiment Design), Durchführung und Auswertung eines Experiments und bei der Findung von statistisch abgesicherte Entscheidungen im Kontext einer Validierung durchgängig und vor allem rechnerverständlich erfasst werden kann. Damit werden auch die einzelnen Schritte z. B. auch durch einen Rechner in Bezug zueinander gesetzt, wodurch eine kontextsensitive Unterstützung durch einen Rechner (Wissensmanagement) möglich ist. Die formalen Regeln, Begrifflichkeiten und deren Beziehungen zueinander ermöglichen ebenfalls, dass auch unerfahrene Ingenieure in der Lage sind, statistisch abgesicherte Entscheidungen bzgl. der Anforderungen eines Produkts während eines Entwicklungsprozesses zu treffen, da ein verfahrensgesteuerten Informationsfilter bevorzugt in der Informationsverarbeitungsvorrichtung das Vorgehen beim Vorbereiten, Durchführen und Auswerten des Experiments und beim Finden von statistisch abgesicherte Entscheidungen vorgibt. Des Weiteren ermöglicht der verfahrensgesteuerte Informationsfilter, dass nur relevante und kontextsensitive Information in einer Vorrichtung nach einer vorgegebenen Struktur gespeichert und bei Bedarf oder auf Anforderung dem Ingenieur aus dieser Vorrichtung zur Verfügung gestellt werden. Somit steht das Expertenwissen in vorteilhafter Weise personenunabhängig zur Verfügung und kann aufgrund der formalen Regeln, Begrifflichkeiten und deren Beziehungen zueinander Antworten auch auf nicht gestellte Frage geben (z. B. Im aktuellen Experiment muss die Öltemperatur variiert werden, da diese im Experiment XY statistisch signifikant war). Die Anzeige der Vorrichtung gibt damit auch Anregungen, die sich aus dem Kontext der vorliegenden Prozessdaten auf der Basis des gespeicherten Expertenwissens ergeben, auch wenn diese nicht explizit angefragt werden oder sich nicht auf die unmittelbar eingebundenen Prozessschritte (z. B. Verbesserungsvorschläge zu den Umweltprozessdaten) beziehen.

Das Verfahren der Wichtung in den Informationsfiltern lässt sich grundsätzlich in die vier folgenden Verfahrensschritte einteilen, wobei je nach Verfahrensschritt sich die formalen Regeln, Begrifflichkeiten und deren Beziehungen zueinander des Informationsfilters unterscheiden:

### 1. Verfahrensschritt:

Der Informationsfilter unterstützt bei der Erfassung, Überprüfung des Expertenwissens im Kontext einer Validierungsaufgabe (Hypothese), indem erfindungsgemäß nur graphische Modelle des Expertenwissens zugelassen werden:
- die mindestens zwei Systeme enthalten, wobei eines der Systeme den Einsatzbereich (basierend auf Umweltdaten) und das andere System das eigentliche Produkt oder den Prozess (basierend auf Prozessdaten) repräsentiert,
- die mindestens drei Prozessdaten (Systemgrößen) aufweisen, die miteinander in Wechselwirkung stehen,
- die aus mindestens zwei Relationen (vorzugsweise Kanten des Graphs, die zwei Objekte verbinden) bestehen, wobei eine Relation jeweils mindestens eine Eingangs- und Ausgangsgröße besitzt und eine Übertragung von Stoff, Energie oder Information repräsentiert sowie
- bei denen das System Umwelt und das System Produkt über Systemgrößen und deren Wechselwirkung miteinander verbunden und somit den Kontext einer Produktvalidierung entsprechen.

Der Informationsfilter unterstützt bei der Darstellung des Expertenwissens, indem die graphischen Modelle:
- eine einheitliche Struktur für die Anordnung von Systemen, Systemgrößen und Relationen aufweisen,
- die Begrifflichkeiten (Systemen, Systemgrößen und Relationen) und deren Beziehungen zueinander von interdisziplinären Entwicklungsteams einheitlich interpretierbar sind,
- ständig auf Konsistenz bzw. Widerspruchsfreiheit im Sinne einer Validierung hin überprüft werden und entsprechende Hinweise erfolgen welche Aspekte noch für eine vollständige Darstellung des Expertenwissens im Kontext einer Validierung erfolgen müssen sowie
- kontextsensitive Informationen zum richtigen Zeitpunkt (d.h. dann, wenn z. B. der Ingenieur die Information benötigt), z. B. beim Durchlauf des entsprechend zugehörigen Prozessschritts angezeigt werden (z. B. Systemgröße X ist eine relevante Systemgröße des Systems Y, da diese im Ablaufplan eines Experiment XY im gleichen Kontext statistisch signifikant war)

### 2. Verfahrensschritt:

Der Informationsfilter unterstützt dabei, dass basierend auf dem erfassten Expertenwissens einen konsistenten Ablaufplan mit dem Ziel einer Produktvalidierung definiert wird, indem:
- die Lücke im Expertenwissen identifiziert wird (z. B. Der Zusammenhang der Einflussgrößen X und Y auf die Zielgröße Z ist nicht bekannt),
- ein beispielhafter Prüfling (d.h. ein System, dessen technische Funktionen vom späteren Kunden wahrgenommen und bewertet werden) und eine Prüfumgebung für den Ablaufplan identifiziert wird, die untereinander kompatibel und konsistent zur identifizierten Lücke im Expertenwissen sind (z. B. Prüfling X und Prüfumgebung Y ermöglichen die Ermittlung des Einflusses der Einflussgrößen X und Y auf die Zielgröße Z),
- mindestens eine Zielgröße (d.h. ein quantitatives Merkmal eines technischen Systems, dessen Werteveränderung während eines Versuchs gemessen wird) und ggf. einen entsprechenden Kennwert definiert wird, als Prozessdatenwert eingegeben und als Expertenwissen abgespeichert wird,
- mindestens eine Steuergröße (d.h. ein quantitatives Merkmal eines technischen Systems, dessen Werteveränderung während eines Versuchs eingestellt wird) und den dazugehörigen Wertebereich festgelegt und als Expertewissen eingegeben wird,
- mindestens eines in der Hypothese modellierte zukünftiges Verhalten eines Systems, welches als Lücke im Expertenwissen identifiziert wurde, überprüft wird,
- die Variation der Steuergröße in Abhängigkeit zur Lücke im Expertenwissen abgeglichen wird sowie
- eine Regel definiert ist, die eine Verifizierung der Hypothese zulässt.

### 3. Verfahrensschritt:

Der Informationsfilter unterstützt dabei, dass die Konsistenz der Prüfsysteme oder Simulationsmodelle zum entworfenen Experiment Design gewährleistet ist und plausible Messdaten erfasst werden, indem:
- zu jeder Steuergröße ein kompatibles System, welches die geforderten Werte einstellen kann, gefunden wird, der auch den vorgegebenen Wertebereich abdeckt bzw. ein Simulationsmodell vorhanden ist, das die relevanten Steuergrößen abbildet (z. B. Aktor A kann Steuergröße X u. Y im definierten Bereich steuern),
- zu jeder Zielgröße ein entsprechender Sensor mit dem dazugehörigen Messsystem gefunden wird, der mit der gewünschten Auflösung den entsprechenden Wertebereich erfasst bzw. ein Simulationsmodell vorhanden ist, das die relevanten Zielgrößen abbildet (z. B. Sensor S kann Zielgröße Z mit der definierten Auflösung erfassen),
- statistischen Kennwerte der experimentellen Daten ermittelt werden, um die Plausibilität zu prüfen (z. B. Die Standardabweichung von Einflussgröße X in Realisierung 3 darf maximal X sein) sowie
- weitere Kennwerte in Bezug zum Expertenwissen definiert sind, wodurch eine spezifische Plausibilitätsprüfung ermöglicht wird.

### 4. Verfahrensschritt:

Der Informationsfilter unterstützt dabei, dass die erfassten Messdaten für die anstehende Entscheidung und für nachfolgende Projekte genutzt werden können, indem:
- die statistische Güte der Verifikation basierend auf der Hypothese festgelegt wird (z. B. für Entscheidung E muss das Bestimmtheitsmaß des Modells mindestens einen Wert Z erreichen),
- die statistische Güte visualisiert wird, um eine schnelle Entscheidungsfindung zu unterstützten,
- die ermittelten statistischen Modelle in Bezug zum Expertenwissen und insbesondere zur Lücke im Expertenwissen gesetzt werden sowie
- die graphische Modelle des Expertenwissens mit dem neuen Wissen angereichert wird, um für nachfolgende Projekt nachhaltig genutzt werden zu können.

Durch die in zuvor beschriebenen Funktionen des verfahrensgesteuerten Informationsfilter, der für die Validierung eines Produkts im Produktentstehungsprozess formale Regeln, Begrifflichkeiten und deren Beziehungen zueinander definiert und als Expertenwissen nachfolgenden Prozessen zur Verfügung stellt, ist zum einen ein unerfahrener Ingenieur bei der einmaligen Durchführung einer Validierungsaufgabe direkt unterstützbar. Zum anderen sind die einzelnen Schritte, d.h. die Vorbereitung (Systemanalyse und Experiment Design), Durchführung und Auswertung eines Experiments und das Finden von statistisch abgesicherte Entscheidungen im Kontext einer Validierung durch einen Rechner unterstützbar, wodurch Antworten auf nicht gestellte Fragen, aufgrund des nachhaltigen Erfassens von Expertenwissens, geben werden können.

Durch die Erfindung ist einerseits die Qualität eines Produkts steigerbar, da die relevanten Zusammenhänge im Kontext einer Validierung nachhaltig und rechnerverständlich erfassbar und als Expertenwissen für statistisch abgesicherte Entscheidungen projektübergreifend und personenunabhängig heranziehbar ist. Zum anderen kann durch die Erfindung die Entwicklungszeit und - kosten reduziert werden. Dies kann gewährleistet werden, da durch die Funktionalität des verfahrensgesteuerten Informationsfilters das Expertenwissens in einer vorgebbaren Struktur erfasst, dargestellt und gespeichert wird. Aufgrund der definierten Struktur des Expertenwissens kann auch die Ausgabe des Expertenwissens in weiteren vorgebbaren Strukturen erfolgen.

Die zuvor beschriebene Funktionalität des verfahrensgesteuerten Informationsfilters macht deutlich, dass die Erfindung vor allem bei der Entwicklung von komplexen Systemen eingesetzt werden kann. Insbesondere bei Produkten die für spezifische Kundensegmente spezielle Anforderungen erfüllen müssen, muss während der Entwicklung mit entsprechenden Experimenten die Frage geklärt werden, ob das richtige Produkt für den späteren Kunden hergestellt wird.

Somit ist der verfahrensgesteuerte Informationsfilter zum einem im Bereich der Fahrzeugindustrie und der Luft- und Raumfahrtindustrie einsetzbar, andererseits auch in Branchen wie z. B. die Chemie-, Lebensmittel- und pharmazeutischen Industrie, da auch hier vorzugsweise Wissen über komplexe Zusammenhänge als Prozessdaten erfasst und statistisch abgesicherte Entscheidungen getroffen werden.

Erfahrungsberichte zeigen, dass bereits allein durch eine konsequente Anwendung der Methoden einer statistischen Versuchsplanung sowohl die Entwicklungszeit als auch die -kosten um 40-75% reduziert werden können. Insbesondere eine im vorgenannten Sinne auch zwischen den einzelnen Datenkreisläufen durchgängige Anwendung ermöglicht eine Erfassung von Wechselwirkungen. Erfahrungsgemäß werden auch bis über 25% der Zeit von Mitarbeitern in Entwicklungsteams dazu benötigt, bestehendes Wissen in einem Unternehmen zu suchen und sich anzueignen. Häufig muss sogar schon einmal erlangtes Wissen durch einen neuen Mitarbeiter oder in einer neuen Abteilung in weiteren Experimenten erneut erlangt werden, um es wieder nutzbar zu machen, da z. B. der Wissensträger (Mitarbeiter) nicht mehr verfügbar oder auffindbar ist.

Erst der verfahrensgesteuerte Informationsfilter in der Informationsverarbeitungsvorrichtung ermöglicht eine kontextsensitive Zusammenführung von Informationen, wodurch ein Wissensmanagement im Kontext einer Validierung realisierbar ist und Vorschläge und Anregungen zur Gestaltung des Produkts oder des Prozesses während den einzelnen Verfahrensschritten gegeben werden können.

Die Erfindung wird anhand von Ausführungsbeispielen deren Ausgestaltungen mit Figuren nachfolgend beschrieben. Es zeigen
**Fig.1** eine prinzipielle Darstellung der Verschaltung der Vorrichtung mit Informationsverarbeitungsvorrichtung, Datenkreisläufen und Speichereinheit sowie
**Fig.2** ein beispielhaftes Ablaufdiagramm für ein Verfahren zur Erfassung, Überprüfung und Speicherung von Prozessdaten aus mindestens zwei Prozessschritten am Beispiel einer Erfassung eins Schleppmoments für ein PKW-Automatikgetriebe.

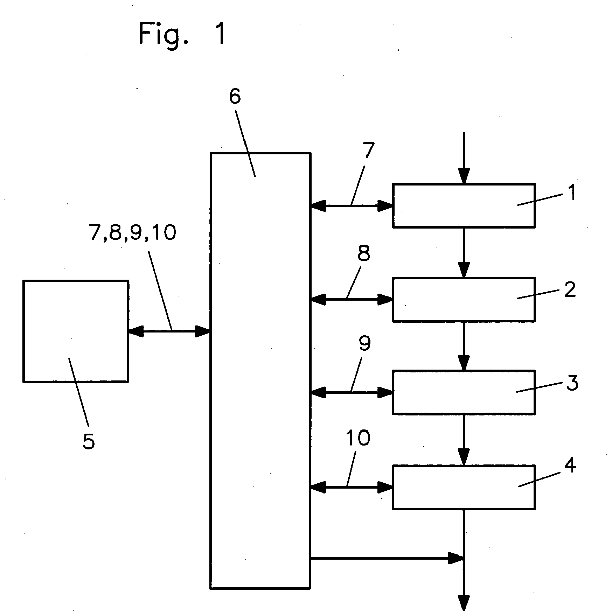

Die in **Fig.1** dargestellte prinzipielle Verschaltung der Vorrichtung dient zur Erfassung, Überprüfung und Speicherung von Prozessdaten aus beispielhaft vier aufeinander folgenden Prozessschritten **1** bis **4.** Sie umfasst ferner eine Speichereinheit **5** sowie eine Informationsverarbeitungsvorrichtung **6,** die über schematisch als Pfeile dargestellte Datenkreisläufe **7** bis **10** als Kommunikationswege zwischen den vorgenannten Einheiten miteinander kommunizieren. Jeder der Datenkreisläufe ist einem der Prozessschritte zugeordnet und führt die in den Prozessschritten erfassten Prozessdaten zu der bevorzugt gemeinsamen Informationsverarbeitungsvorrichtung. Jene weist hierzu je Datenkreislauf jeweils mindestens einen Eingang für Prozessdaten sowie für ein gespeichertes Expertenwissen auf. Ferner enthält die Informationsverarbeitungsvorrichtung eine Bearbeitungslogik für eine Verarbeitung der Prozessdaten mit dem gespeicherten Expertenwissen zu einem neuen Expertenwissen und einem Ausgang für das neue Expertenwissen über die Datenkreisläufe zu mindestens einer vorzugsweise für alle Datenkreisläufe gemeinsamen Speichereinheit und auch zurück zu den Prozessschritten.

Das zurückgeleitete Expertenwissen wird jedoch vorzugsweise nicht direkt in den Prozessschritt eingebunden, sondern wird zunächst wie vorgenannt durch eine Anzeige angezeigt. Vorzugsweise weist die Informationsverarbeitungsvorrichtung hierzu Ausgabemittel wie z. B. einen Bildschirm für eine Anzeige auf. Eine Einbindung des Expertenwissen erfolgt dann entweder rein manuell oder zumindest teilweise automatisiert vorzugsweise nach einer entsprechenden manuellen Freigabe.

Die gemeinsame Speicherung des in mehreren Prozessschritten generierten und mit vorangegangenen und vorzugsweise abgeschlossenen Prozessen generierten Expertenwissens ermöglicht einen Zugang des gespeicherten Wissens für den laufenden wie auch für nachfolgende Prozesse. Ein Zugang des gespeicherten Expertenwissens ist für alle Datenkreisläufe, auch für zukünftig eingebundene Prozesse vorgesehen.

Die gemeinsame Speicherung zentral in einer oder mehreren Speichereinheiten erfolgt bevorzugt durch oder in einer Informationsverarbeitungsvorrichtung.

Grundsätzlich sind mindestens zwei oder mehrere komplette Vorrichtungen mit den in Fig.1 dargestellten Komponenten miteinander vernetzbar. Eine Ausgestaltung sieht mindestens zwei beispielsweise dezentrale, aber miteinander vernetzt verschaltete Informationsverarbeitungsvorrichtungen mit jeweils einer gemeinsamen Speicherung auf eine oder mehrere Speichereinheiten vor. Die Prozessdatenverarbeitung erfolgt dabei entweder
- getrennt in einer Informationsverarbeitungsvorrichtung (vorteilhaft bei zumindest temporär autark betriebenen Prozessen und Optimierungen, die eine spätere Zusammenführung des Expertenwissens auch für andere Prozesse ermöglicht, z. B. bei störungsanfälligen Übertragungswegen wie z. B. in der Raumfahrt, in unerschlossenen Gebieten oder in mobilen Systemen wie bei Fahrzeugfahrten),
- redundant in mindestens zwei Informationsverarbeitungsvorrichtungen zugleich (z. B. bei störungsanfälligen und/oder sicherheitsrelevanten Systemen zur Absicherung oder bei Parametervariation) oder
- ergänzend in mehreren mindestens zwei Informationsverarbeitungsvorrichtungen (in einer ausreichend zuverlässig vernetzbaren Umgebung für eine flexible, beispielsweise auch dezentrale Einbindung von Prozessorkapazitäten, z. B. Cloud-Systeme).

Die beschriebene und in **Fig.1** beispielhaft auch für die vorgenannten Ausgestaltungen dargestellte Vorrichtung mit Informationsverarbeitungsvorrichtung, Datenkreisläufen und Speichereinheit für Expertenwissens in einer vorgegebenen Struktur wird vorzugsweise in einer Soft- und Hardware-Kombination umgesetzt.

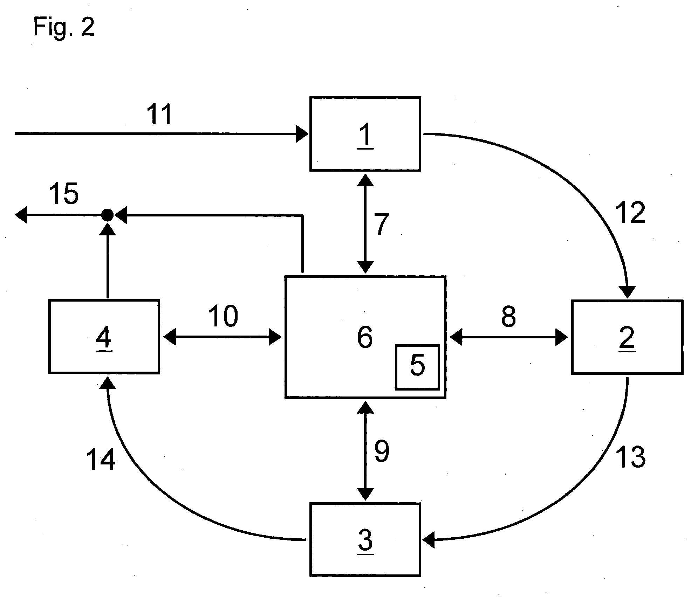

Anhand von **Fig.2** wird an einem Ausführungsbeispiel mit vier Prozessschritten die Funktion der Software erläutert. Das dargestellte Verfahren und Vorrichtung dienen der objektiven nachvollziehbaren und zugänglichen Wissensgenerierung.

Ein erster Prozessschritt **1** (mit Datenkreislauf für ersten Prozessschritt **7)** umfasst eine oder korrespondiert mit einer Modellierung des Expertenwissens, bei dem die Zusammenhänge und Einflussfaktoren einzelner Parameter oder Messwerte auf den Gesamtprozess erfasst und anhand des danach generierten, aufgerufenen und/oder angezeigten Expertenwissens optimiert werden. Der erste Prozessschritt dient damit einer Versuchsvorbereitung. Ausgangspunkt für Prozessschritt ist hierfür eine Prozess-Zielvorgabe **11,** die im Rahmen des ersten Prozessschritts in eine Vorgabe für eine Versuchsplanung **12** verarbeitet wird. Die Vorgabe für eine Versuchsdurchführung umfasst insbesondere die offenen Punkte, die im weiteren Prozess angepasst, ermittelt, geprüft oder optimiert werden.

Im Prozessschritt **1** unterstützt der verfahrensgesteuerte Informationsfilter bei der Erfassung und Überprüfung des Expertenwissens im Kontext einer Validierungsaufgabe (Hypothese), wobei das Expertenwissen nach einer definierten Struktur von den Experten modelliert, angezeigt und in der Speichereinheit **5** gespeichert wird. Ebenfalls wird im Prozessschritt **1** durch den Informationsfilter kontextsensitives Wissen (Expertenwissen) angezeigt, das aus vorangegangenen Projekten bereits erfasst wurde, wodurch die den Prozess gestaltenden Experten im ersten Schritt bei der Systemanalyse unterstützt werden. Das angezeigte Expertenwissen umfasst in diesem Prozessschritt insbesondere auch zusätzliche prozessbegleitende Informationen und Anregungen für den weiteren Prozessverlauf.

Es folgt als zweiter Prozessschritt **2** als Versuchsplanung. Ausgangspunkt hierfür ist die vorgenannte Vorgabe für eine Versuchsplanung **12,** die zu einer Vorgabe für eine Versuchsdurchführung und -Auswertung **13** verarbeitet wird.

Im zweiten Prozessschritt **2** werden abhängig vom Informationsfilter z. B. Experimente für die Produktvalidierung entworfen, indem Anforderungen an den Prüfling, die Prüfumgebung und den Versuchsplan festgelegt werden. Ausgangsbasis hierzu ist die Identifizierung möglicher Lücken im abgespeicherten Expertenwissen. Hierzu wird das für diesen Schritt kontextsensitive Expertenwissen, angezeigt, das basierend auf dem ersten Schritt und aus vorangegangenen Projekten gespeichert wurde. Ebenfalls wird das im zweiten Prozessschritt neu erzeugte kontextsensitive Wissen gespeichert, damit es für die weiteren Schritte und für nachfolgende Projekte zur Verfügung steht. Ferner ist das Expertenwissen als relevantes Erzeugnis, d.h. als Output in einem definierten Datenformat, dargestellt werden. Das angezeigte Expertenwissen umfasst beispielsweise auch Einflussfaktoren und Zielgrößen.

Es folgt als dritter Prozessschritt **3** als Versuchsdurchführung und die Versuchsanalyse. Ausgangspunkt hierfür ist die vorgenannte Vorgabe für eine Versuchsdurchführung und -Auswertung **13,** die zu einer Vorgabe für Entscheidungskriterien **14** verarbeitet wird.

Im dritten Prozessschritt wird durch den Informationsfilter die Prüfumgebung mit dem kontextsensitiven Wissen aus der Speichereinheit, welches im ersten und zweiten Prozessschritt **1** und **2** erfasst wurde, definiert. Hierbei wird durch den Informationsfilter erreicht, dass die Konsistenz der Prüfsysteme oder von Simulationsmodelle zum entworfenen Experiment Design gewährleistet ist. Das Wissen über die konfigurierte Prüfumgebung wird wiederum gespeichert und ggf. als Erzeugnis bereitgestellt. Zusätzlich wird im dritten Prozessschritt die Plausibilität der Messdaten basierend auf dem kontextsensitiven Expertenwissen, welches in im ersten und zweiten Prozessschritt **1** und **2** erfasst wurde, überprüft. Das angezeigte Expertenwissen umfasst vorzugsweise das Zwischenergebnis des Versuchs.

Es folgt als vierter Prozessschritt **4** als Entscheidungsfindung. Ausgangspunkt hierfür ist die vorgenannte Vorgabe für Entscheidungskriterien **14,** die unter Heranziehung des Expertenwissens aus der Informationsverarbeitungsvorrichtung zu einem Ergebnis **15** des Prozesses verarbeitet wird.

Im vierten Prozessschritt **4** wird die Güte der Verifikation basierend auf dem davor festgelegten Experiment Design in Abhängigkeit zur Validierungsaufgabe (Hypothese) ermittelt. Ferner setzt der Informationsfilter die ermittelten Modelle in Bezug zum Expertenwissen, wodurch statistische Entscheidungen bzgl. der weiteren Entwicklung des Produkts automatisiert bzw. teilautomatisiert getroffen werden können. Durch den Informationsfilter kann das erlangte Wissen für nachfolgende Projekte in den entsprechenden Schritten personenunabhängig wiederverwendet werden.

Durch den ersten Prozessschritt **1** kann das Expertenwissen in einer grafischen Struktur dargestellt und erfasst werden, wodurch zum einen die Kommunikation in interdisziplinären Entwicklungsteams verbessert wird. Zum anderen kann das Wissen nachhaltig und personenunabhängig gespeichert werden. Durch den zweiten, dritten und vierten Prozessschritt wird das erfasste Expertenwissen in Bezug zu einem Experiment gesetzt und zu statistisch abgesicherten Entscheidungen genutzt werden. Hieraus ergibt sich ein sehr breiter Anwendungsbereich, wobei beim Durchlaufen der Prozessschritte **1** bis **4** der größte Nutzen des entwickelten verfahrensgesteuerten Informationsfilters erreicht wird. Somit sind die Kunden alle diejenigen, die das vorhandene Expertenwissen durch Experimente gezielt anreichen wollen bzw. müssen, um richtige Entscheidungen während der Entwicklung treffen zu können.

Die Darstellung des Expertenwissens ändert sich je nach Prozessschritt:
In Prozessschritt 1 wird das Expertenwissen in einem Graph dargestellt, dessen Objekte und deren gerichtete Kanten nach einer definierten Logik, die speziell auf die Validierung und
Optimierung von Produkten oder Prozessen ausgelegt ist, erstellt, überprüft und angezeigt wird. Die Logik bezüglich der jeweiligen Objekte und deren gerichteten Kanten ermöglicht,
dass der Graph fortlaufend auf Vollständigkeit und Richtigkeit geprüft werden kann.

In Prozessschritt 2 und 3 werden die Objekte und deren gerichteten und teilweise gewichteten Kanten in einem nicht zusammenhängenden Graph angezeigt, wobei das Expertenwissen eineindeutig kontextsensitiv wiedergegeben wird und die Logik für die Prüfung auf Vollständigkeit und Richtigkeit genutzt wird. Das kontextsensitive Expertenwissen wirkt sich direkt auf reale Systeme d.h. Prüfling oder Prüfumgebung aus (z.B. Veränderung der geometrischen Abmaße und/oder Software-Konfiguration des Prüflings oder Festlegung der Hardware und Software-Konfiguration der Prüfumgebung.

In Prozessschritt 4 werden die Objekte und deren gerichtete und teilweise gewichteten Kanten wieder als zusammenhängender Graph dargestellt, wobei sich dieser nur durch die Wichtung von Prozessschritt 1 unterscheidet. Das kontextsensitive Expertenwissen wirkt sich direkt auf reale Systeme d.h. auf das Produkt aus (z.B. Veränderung der geometrischen Abmaße des Produktes oder Festlegung der Software-Konfiguration des Produktes). Die Logik der Informationsverarbeitungsvorrichtung (6) und der Speichereinheit 5 kann alle Objekte und deren gerichteten und teilweise gewichteten Kanten unabhängig des Prozessschrittes verarbeiten.

### Bezugszeichenliste:

- 1: erster Prozessschritt, z. B. Modellierung des Expertenwissens
- 2: zweiter Prozessschritt, z. B. Versuchsplanung
- 3: dritter Prozessschritt, z. B. Versuchsdurchführung und Analyse
- 4: vierter Prozessschritt, z. B. Entscheidung
- 5: Speichereinheit
- 6: Informationsverarbeitungsvorrichtung
- 7: Datenkreislauf für ersten Prozessschritt
- 8: Datenkreislauf für zweiten Prozessschritt
- 9: Datenkreislauf für dritten Prozessschritt
- 10: Datenkreislauf für vierten Prozessschritt
- 11: Prozess-Zielvorgabe
- 12: Vorgabe für eine Versuchsplanung
- 13: Vorgabe für eine Versuchsdurchführung und -Auswertung
- 14: Vorgabe für Entscheidungskriterien
- 15: Ergebnis

## Patentansprüche

1. Vorrichtung zur Erfassung, Überprüfung und Speicherung von Zustandsdaten aus mindestens vier Prozessschritten **(1, 2, 3, 4)** für die Gestaltung eines industriellen Prozesses oder eines industriellen Produktes, umfassend
a) Mindestens ein Messmittel zur Erfassung der Zustandsdaten,
b) Mindestens vier Datenkreisläufe **(7, 8, 9, 10)** für die Zustandsdaten, wobei jeder Datenkreislauf einem Prozessschritt zugeordnet ist, mit
c) einer gemeinsamen Informationsverarbeitungsvorrichtung oder jeweils einer Informationsverarbeitungsvorrichtung **(6)** je Datenkreislauf mit einem Eingang für Zustandsdaten sowie für ein gespeichertes umweltbezogenes und produktbezogenes Expertenwissen, einer Bearbeitungslogik für eine Verarbeitung der Zustandsdaten mit dem gespeicherten Expertenwissen zu einem neuen umweltbezogenes und produktbezogenes Expertenwissen und einem Ausgang für das neue Expertenwissen sowie
d) einer Speichereinheit **(5)** für eine Abspeicherung des neuen Expertenwissens aus allen Datenkreisläufen als gespeichertes Expertenwissen,
wobei
e) ein Zugang des gespeicherten Expertenwissens für alle Datenkreisläufe vorgesehen ist, wobei der Zugang dadurch realisiert ist, dass die Informationsverarbeitungsvorrichtungen (6) mindestens einen verfahrensgesteuerten Informationsfilter aufweisen, durch den Zustandsdaten, Information und Expertenwissen kontextsensitiv zusammenführbar und selektierbar sind sowie
f) die Informationsverarbeitungsvorrichtungen **(6)** jeweils eine Anzeige für das neue Expertenwissen aufweisen, **dadurch gekennzeichnet, dass**
g) die Darstellung des Expertenwissens sich je nach Prozessschritt ändert,
wobei in einem ersten Prozessschritt das Expertenwissen in einem Graph darstellbar ist, dessen Objekte und deren gerichtete Kanten nach einer vorgebbaren Logik des Informationsfilters erstellbar, überprüfbar und auf der Anzeige anzeigbar ist, wobei die vorgebbare Logik des Informationsfilters nur graphische Modelle des Expertenwissens zulässt:
- die mindestens zwei Systeme enthalten, wobei eines der Systeme auf umweltbezogenes Expertenwissen und das andere System auf produktbezogenes Expertenwissen basiert;
- die mindestens drei Zustandsdaten aufweisen, die miteinander in Wechselwirkung stehen;
- die aus mindestens zwei Relationen bestehen, wobei eine Relation jeweils mindestens eine Eingangs- und Ausgangsgröße besitzt und eine Übertragung von Stoff, Energie oder Information repräsentiert;
- bei denen das auf umweltbezogenes Expertenwissen basierte System und das auf produktbezogenes Expertenwissen basierte System über Zustandsdaten und deren Wechselwirkung miteinander verbunden sind; und
- die eine vorgebbare einheitliche Struktur sowie einheitlich interpretierbare Begrifflichkeiten aufweisen, widerspruchsfrei sind sowie kontextsensitive Informationen enthalten, wobei die Logik bezüglich der Objekte und deren gerichteten Kanten eine fortlaufende Prüfung und damit eine zumindest teilweise Wichtung auf Vollständigkeit und Richtigkeit ermöglicht, wobei in einem zweiten und dritten Prozessschritt die Objekte und deren gerichteten und teilweise gewichteten Kanten in einem nicht zusammenhängenden Graph auf der Anzeige anzeigbar sind, wobei das Expertenwissen eineindeutig kontextsensitiv wiedergebbar ist und die Logik für die Prüfung auf Vollständigkeit und Richtigkeit nutzbar ist,
wobei in einem vierten Prozessschritt die Objekte und deren gerichtete und teilweise gewichteten Kanten wieder als zusammenhängender Graph darstellbar sind, wobei sich dieser nur durch die Wichtung von dem ersten Prozessschritt unterscheidet.

2. Vorrichtung nach Anspruch 1, **dadurch gekennzeichnet, dass** der Zugang nur durch eine gemeinsame Speichereinheit **(5)** realisiert ist.

3. Vorrichtung nach einem der vorgenannten Ansprüche, **dadurch gekennzeichnet, dass** mindestens ein Prozessschritt **(1, 2, 3, 4)** mindestens eine Rückmeldung als Prozessdaten umfasst, wobei die Rückmeldungen Prozessdaten aus vorangegangenen Prozessschritten ergänzen.

4. Vorrichtung nach einem der vorgenannten Ansprüche, **dadurch gekennzeichnet, dass** Informationsverarbeitungsvorrichtung **(6)** und/oder Speichereinheit **(5)** Teil eines Netzwerkes mit mindestens einer weiteren Informationsverarbeitungsvorrichtung und/oder Speichereinheit ist.

5. Verfahren zur Erfassung, Überprüfung und Speicherung von Prozessdaten aus mindestens vier Prozessschritten **(1, 2, 3, 4)** für die Gestaltung eines industriellen Prozesses oder eines industriellen Produktes, umfassend die folgenden Verfahrensschritte:
a) Bereitstellung mindestens eines Messmittels zur Erfassung der Zustandsdaten, mindestens vier Datenkreisläufe **(7, 8, 9, 10)** für die Zustandsdaten, jeweils einer Informationsverarbeitungsvorrichtung **(6)** je Datenkreislauf mit einem Eingang für Zustandsdaten sowie für ein gespeichertes umweltbezogenes und produktbezogenes Expertenwissen, einer Bearbeitungslogik und einem Ausgang für ein neues umweltbezogenes und produktbezogenes Expertenwissen sowie einer Speichereinheit **(5)**
b) Erfassung der Zustandsdaten aus den Prozessschritten mittels des mindestens einen Messmittels jeweils separat,
c) Einspeisung der Zustandsdaten je Prozessschritt in je einen der mindestens vier Datenkreisläufe **(7, 8, 9, 10)** wobei jeder Datenkreislauf einem Prozessschritt zugeordnet ist,
d) Weiterleitung der Zustandsdaten je Prozessschritt sowie eines gespeicherten Expertenwissens zu je einer der Informationsverarbeitungsvorrichtungen **(6),**
e) Verarbeitung der Zustandsdaten in den Informationsverarbeitungsvorrichtungen je Prozessschritt mit dem gespeicherten Expertenwissen zu einem neuen Expertenwissen mittels der Bearbeitungslogik,
f) Weiterleiten des neuen Expertenwissen in den Datenkreisläufen über den Ausgang zu der Speichereinheit **(5)**,
g) Abspeichern des neuen Expertenwissen in der Speichereinheit aus allen Datenkreisläufen als gespeichertes Expertenwissen sowie
h) Bereitstellung des gespeicherten Expertenwissens für alle Datenkreisläufe durch mindestens einen verfahrensgesteuerten Informationsfilter der Informationsverarbeitungsvorrichtungen (6), durch den Zustandsdaten, Information und Expertenwissen kontextsensitiv zusammenführbar und selektierbar sind, wobei
i) das neue Expertenwissen jeweils in einer Anzeige auf den Informationsverarbeitungsvorrichtungen **(6)** dargestellt werden,
**dadurch gekennzeichnet, dass**
j) die Darstellung des Expertenwissens sich je nach Prozessschritt ändert, wobei in einem ersten Prozessschritt das Expertenwissen in einem Graph dargestellt wird, dessen Objekte und deren gerichtete Kanten nach einer vorgebbaren Logik des Informationsfilters erstellt, überprüft und auf der Anzeige angezeigt werden, wobei die vorgebbare Logik des Informationsfilters nur graphische Modelle des Expertenwissens zulässt:
- die mindestens zwei Systeme enthalten, wobei eines der Systeme auf umweltbezogenes Expertenwissen und das andere System auf produktbezogenes Expertenwissen basiert;
- die mindestens drei Zustandsdaten aufweisen, die miteinander in Wechselwirkung stehen;
- die aus mindestens zwei Relationen bestehen, wobei eine Relation jeweils mindestens eine Eingangs- und Ausgangsgröße besitzt und eine Übertragung von Stoff, Energie oder Information repräsentiert;
- bei denen das auf umweltbezogenes Expertenwissen basierte System und das auf produktbezogenes Expertenwissen basierte System über Zustandsdaten und deren Wechselwirkung miteinander verbunden sind; und
- die eine vorgebbare einheitliche Struktur sowie einheitlich interpretierbare Begrifflichkeiten aufweisen, widerspruchsfrei sind sowie kontextsensitive Informationen enthalten, wobei die Logik bezüglich der Objekte und deren gerichteten Kanten eine fortlaufende Prüfung und damit eine zumindest teilweise Wichtung auf Vollständigkeit und Richtigkeit ermöglicht, wobei in einem zweiten und dritten Prozessschritt die Objekte und deren gerichteten und teilweise gewichteten Kanten in einem nicht zusammenhängenden Graph auf der Anzeige angezeigt werden, wobei das Expertenwissen eineindeutig kontextsensitiv wiedergegeben wird und die Logik für die Prüfung auf Vollständigkeit und Richtigkeit genutzt wird, wobei in einem vierten Prozessschritt die Objekte und deren gerichtete und teilweise gewichteten Kanten wieder als zusammenhängender Graph dargestellt werden, wobei sich dieser nur durch die Wichtung von dem ersten Prozessschritt unterscheidet.

6. Verfahren nach Anspruch 5, umfassend ein Anzeigen des neuen Expertenwissens je Prozessschritt.

7. Verfahren nach Anspruch 6, **dadurch gekennzeichnet, dass** das angezeigte Expertenwissen auf der Anzeige jeweils einem Prozessschritt zugeordnet ist.

8. Verfahren nach einem der vorgenannten Ansprüche 5 bis 7, **dadurch gekennzeichnet, dass** die Zustandsdaten und das Expertenwissen in graphischen Modellen dargestellt wird, mit durch eine Logik bestimmten Objekten und gerichteten und teilweise gewichteten Kanten.

9. Verfahren nach einem der vorgenannten Ansprüche 5 bis 8, **dadurch gekennzeichnet, dass** je nach Prozessschritt weitere kontextrelevante Zustandsdaten erfasst werden, wobei eine Abhängigkeit zwischen den vorigen und nachfolgenden Prozessschritten besteht, und die Zuordnung eines Prozessschritts zu einem der Datenkreisläufe entsprechend eine Zuordnung der kontextrelevanten Zustandsdaten zu einem der Datenkreisläufe erfolgt.

10. Verfahren nach einem der vorgenannten Ansprüche 5 bis 9, **dadurch gekennzeichnet, dass** die Verarbeitung der Prozessdaten in den Informationsverarbeitungsvorrichtungen je Prozessschritt mit dem gespeicherten Expertenwissen zu einem neuen Expertenwissen mittels der Bearbeitungslogik in der Weise erfolgt, dass die Zustandsdaten und das gespeicherte Expertenwissen sich durch Abhängigkeiten in den Objekten und den gerichteten und teilweise auch gewichteten Kanten auszeichnet.

## Claims

1. Device for detecting, checking, and storing process data from at least four process steps (1,2,3,4) for the configuration of an industrial process, comprising
a) at least one measuring means for detecting the process data,
b) at least four data circuits (7,8,9,10) for the process data, wherein each data circuit is assigned to a process step, with
c) a common information processing device or in each case one information processing device (6) per data circuit, with an input for process data and for stored environment-related and product-related expert knowledge, a processing logic unit for processing the process data with the stored expert knowledge into new environment-related and product-related expert knowledge, and an output for the new expert knowledge, and
d) a storage unit (5) for the storage of the new expert knowledge from all the data circuits as stored expert knowledge,
wherein
e) an access for the stored expert knowledge is provided for all the data circuits, wherein the access is realised by the information processing devices (6) comprising at least one process-controlled information filter, by which the process data, information, and expert knowledge can be collated and selected in a context-sensitive manner, and
f) the information processing devices (6) comprise in each case a display for the new expert knowledge,
**characterised in that**
g) the representation of the expert knowledge changes depending on the process step, wherein, in a first process step the expert knowledge can be represented in a graph, of which the objects and their aligned edges can be generated and checked in accordance with a predeterminable logic of the information filter, and can be displayed on the display, wherein the predeterminable logic of the information filter allows only for graphic models of the expert knowledge:
- which contain at least two systems, wherein one of the systems is based on environment-related expert knowledge and the other system is based on product-related expert knowledge;
- which exhibit at least three process data items, which stand in reciprocal effect with one another;
- which consist of at least two relations, wherein one relation has at least one input size and one output size, and represents a transfer of substance, energy, or information;
- with which the system based on the environment-related expert knowledge and the system based on the product-related expert knowledge are connected to one another by way of process data and their reciprocal effect;
and
- exhibit a predeterminable unitary structure and conceptions which can be interpreted in a unitary manner, are free of contradiction, and contain context-sensitive information, wherein the logic unit allows for an ongoing check with regard to the objects and their aligned edges, and therefore an at least partial weighting with regard to completeness and correctness, wherein, in a second and third process step, the objects and their aligned and partially weighted edges can be displayed, wherein the expert knowledge can be reproduced in an unambiguous context-sensitive manner, and the logic can be used for the check on completeness and correctness,
- wherein, in a fourth process step, the objects and their aligned and partially weighted edges can again be represented as a cohesive graph, wherein this differs from the first process step by way of the weighting.

2. Device according to claim 1, **characterised in that** the access is only realised by a common storage unit (5).

3. Device according to any one of the preceding claims, **characterised in that** at least one process step (1,2,3,4) includes at least one check-back as process data, wherein the check-backs supplement the process data from preceding process steps.

4. Device according to any one of the preceding claims, **characterised in that** the information processing device (6) and/or storage unit (5) is a part of a network with at least one further information processing device and/or storage unit.

5. Method for detecting, checking, and storing process data from at least four process steps (1,2,3,4) for the configuration of an industrial process or an industrial product, comprising the following method steps:
a) Provision of at least one measuring means for detecting the process data, at least four data circuits (7,8,9,10) for the process data, in each case one information processing device (6) per data circuit with an input for process data and for stored environment-related and product-related expert knowledge, a processing logic unit and an output for a new environment-related and product-related expert knowledge, and a storage unit (5),
b) detection of the process data from the process steps by means of the at least one measuring means, in each case separately,
c) storing of the process data per process step in each case in one of the at least four data circuits (7,8,9,10), wherein each data circuit is assigned to a process step,
d) forwarding of the process data per process step and of a stored expert knowledge item in each case to one of the information processing devices (6),
e) processing of the process data in the information processing devices per process step with the expert knowledge, to a new expert knowledge by means of the processing logic,
f) forwarding of the new expert knowledge in the data circuits via the output to the storage unit (5),
g) storing of the new expert knowledge in the storage unit from all the data circuits as stored expert knowledge, and
h) provision of the stored expert knowledge for all the data circuits by means of at least one process-controlled information filter of the information processing devices (6), by means of which process data, information, and expert knowledge can be collated and selected in a context-sensitive manner,
wherein
i) the new expert knowledge is in each case represented in a display on the information processing devices (6),
**characterised in that**
j) the representation of the expert knowledge changes depending on the process step, wherein, in a first process step the expert knowledge is represented in a graph, of which the objects and their aligned edges are generated and checked in accordance with a predeterminable logic of the information filter and displayed on the display, wherein the predeterminable logic of the information filter only allows for graphic models of the expert knowledge;
- which contain at least two systems, wherein one of the systems is based on environment-related expert knowledge and the other system is based on product-related expert knowledge;
- which exhibit at least three process data items, which stand in reciprocal effect with one another;
- which consist of at least two relations, wherein one relation has at least one input size and one output size, and represents a transfer of substance, energy, or information;
- with which the system based on the environment-related expert knowledge and the system based on the product-related expert knowledge are connected to one another by way of process data and their reciprocal effect;
and
- exhibit a predeterminable unitary structure and conceptions which can be interpreted in a unitary manner, are free of contradiction, and contain context-sensitive information, wherein the logic unit allows for an ongoing check with regard to the objects and their aligned edges, and therefore an at least partial weighting with regard to completeness and correctness, wherein, in a second and third process step, the objects and their aligned and partially weighted edges can be displayed in a non-cohesive graph on the display, wherein the expert knowledge is reproduced in an unambiguous context-sensitive manner, and the logic unit is used for checking for completeness and correctness, wherein, in a fourth process step, the objects and their aligned and partially weighted edges are again represented as a cohesive graph, wherein this differs from the first process step only by the weighting.

6. Method according to claim 5, comprising a display of the new expert knowledge per process step.

7. Method according to claim 6, **characterised in that** the expert knowledge displayed on the display is assigned in each case to a process step.

8. Method according to any one of the preceding claims 5 - 7 **characterised in that** the process data and the expert knowledge are represented in graphic models, with objects and aligned and partially weighted edges determined by a logic unit.

9. Method according to any one of the preceding claims 5 - 8, **characterised in that**, depending on the process step, further context-relevant process data is detected, wherein a dependency exists between the preceding and following process steps, and the assignment of a process step to one of the data circuits takes place according to an assignment of the context-relevant process data to one of the data circuits.

10. Method according to any one of the preceding claims 5 to 9, **characterised in that** the processing of the process data in the information processing devices per process step with the stored expert knowledge to a new expert knowledge takes place by means of the processing logic in such a way that the process data and the stored expert knowledge are **characterised by** interdependencies in the objects and the aligned and partially also weighted edges.

## Revendications

1. Dispositif permettant de détecter, de vérifier et de mettre en mémoire des données d'état provenant d'au moins quatre étapes de processus (1, 2, 3, 4) pour permettre la conception d'un processus industriel ou d'un produit industriel comprenant :
a) au moins un moyen de mesure permettant de détecter les données d'état,
b) au moins quatre circuits de données (7, 8, 9, 10) pour les données d'état, chaque circuit de données étant associé à une étape de processus, comportant
c) un dispositif de traitement d'information commun ou un dispositif de traitement d'information (6) respectif pour chaque circuit de données ayant une entrée pour des données d'état et pour des connaissances spécialisées relatives à l'environnement et relatives au produit enregistrées, une logique de traitement permettant un traitement des données d'état avec les connaissances spécialisées enregistrées pour obtenir de nouvelles connaissances spécialisées relatives à l'environnement et relatives au produit ainsi qu'une sortie pour les nouvelles connaissances spécialisées, et
d) une unité de mémoire (5) permettant la sauvegarde des nouvelles connaissances spécialisées provenant de tous les circuits de données en tant que connaissances spécialisées mises en mémoire, dispositif dans lequel :
e) il est prévu un accès aux connaissances spécialisées mises en mémoire pour tous circuits de données, cet accès étant réalisé du fait que les dispositifs de traitement d'information (6) comportent au moins un filtre d'information commandé par un procédé par lequel des données d'état des informations et des connaissances spécialisées peuvent être rassemblées et sélectionnées de façon sensible au contexte, et
f) les dispositifs de traitement d'information (6) comportent chacun un affichage des nouvelles connaissances spécialisées,
**caractérisé en ce que**
g) 1a représentation des connaissances spécialisées varie selon l'étape de processus,
lors d'une première étape de processus, les connaissances spécialisées peuvent être représentées par un graphe dont les objets et les bords orientés peuvent être établis conformément à une logique définissable du filtre d'information et qui peut être indiqué sur l'affichage, la logique prédéfinissable du filtre d'information n'autorisant que des modèles graphiques des connaissance spécialisées :
- qui comportent au moins deux systèmes, l'un de ces systèmes étant basé sur des connaissances spécialisées relatives à l'environnement et l'autre système étant basé sur des connaissances spécialisées relatives au produit,
- qui comportent au moins trois données d'état qui interagissent les unes avec les autres,
- qui sont constitués d'au moins deux relations, l'une des relations comportant respectivement au moins une grandeur d'entrée et une grandeur de sortie et représentant un transfert de matière d'énergie ou d'information,
- le système basé sur des connaissances spécialisées relatives à l'environnement et le système basé sur des connaissances spécialisées relatives au produit étant reliés par des données d'état et leur interaction, et
- qui ont une structure unitaire prédéfinissable ainsi que des terminologies pouvant être interprétées de façon unitaire, sont exempts de contradiction et renferment des informations sensibles au contexte,
- la logique permettant un contrôle continu et par suite, une pondération au moins partielle relative au caractère complet et à l'exactitude, des objets et de leurs bords orientés,
lors d'une seconde étape de processus et une troisième étape de processus, les objets et leur bords orientés et partiellement pondérés peuvent être représentés sur l'affichage, par un graphe non continu, les connaissances spécialisées étant clairement reproductibles de façon sensible au contexte et la logique pouvant être utilisée pour vérifier le caractère complet et l'exactitude,
lors d'une quatrième étape de processus, les objets et leurs bords orientés et partiellement pondérés peuvent à nouveau être représentés sous la forme d'un graphe continu, celle-ci ne se distinguant de la première étape de processus que par la pondération.

2. Dispositif conforme à la revendication 1,
**caractérisé en ce que**
l'accès n'est réalisé que par une unité de mémoire (5) commune.

3. Dispositif conforme à l'une des revendications précédentes,
**caractérisé en ce qu'**
au moins une étape de processus (1, 2, 3, 4) comprend au moins un accusé de réception en tant que données de processus, les accusés de réception complétant des données de processus provenant des étapes de processus antérieures.

4. Dispositif conforme à l'une des revendications précédentes,
**caractérisé en ce que**
le dispositif de traitement d'information (6) et/ou l'unité de mémoire (5) est une partie d'un réseau ayant au moins un autre dispositif de traitement d'information et/ou une autre unité de mémoire.

5. Procédé permettant de détecter, de vérifier et de mettre en mémoire des données de processus provenant d'au moins quatre étapes de processus (1, 2, 3, 4) pour permettre la conception d'un processus industriel ou d'un produit industriel comprenant les étapes suivantes consistant à :
a) se procurer au moins un moyen de mesure permettant de détecter les données d'état d'au moins quatre circuits de données (7, 8, 9, 10) pour les données d'état, un dispositif de traitement d'information respectif (6) pour chaque circuit de données ayant une entrée pour des données d'état ainsi et pour des connaissances spécialisées relatives à l'environnement et relatives au produit enregistrées, une logique de traitement et une sortie pour de nouvelles connaissances spécialisées relatives à l'environnement et relatives au produit ainsi qu'une unité de mémoire (5),
b) détecter les données d'état provenant des étapes de processus au moyen du moyen de mesure de façon respectivement indépendante,
c) introduire les données d'état pour chaque étape de processus dans l'un respectif des quatre circuits de données (7, 8, 9, 10), chaque circuit de données étant associé à une étape de processus,
d) transférer les données d'état pour chaque étape de processus ainsi que des connaissances spécialisées enregistrées à l'un respectif des dispositifs de traitement d'information (6),
e) traiter les données d'état dans le dispositif de traitement d'information pour chaque étape de processus avec les connaissances spécialisées enregistrées pour obtenir de nouvelles connaissances spécialisées au moyen de la logique de traitement,
f) transférer les nouvelles connaissances spécialisées dans les circuits de données par l'intermédiaire de la sortie vers l'unité de mémoire (5),
g) sauvegarder dans l'unité de mémoire les nouvelles connaissances spécialisées provenant de tous les circuits de données en tant que connaissances spécialisées mises en mémoire, et
h) fournir les connaissances spécialisées mises en mémoire pour tous les circuits de données par l'intermédiaire d'au moins un filtre d'information commandé par un procédé des dispositifs de traitement d'information (6) par lequel des données d'état, des informations et des connaissances spécialisées peuvent être rassemblées et sélectionnées de façon sensible au contexte,
procédé selon lequel :
i) les nouvelles connaissances spécialisées sont respectivement représentées sur un affichage des dispositifs de traitement d'information (6),
**caractérisé en ce que**
j) la représentation des connaissances spécialisées varie selon l'étape de processus,
lors d'une première étape de processus, les connaissances spécialisées sont représentées sur un graphe dont les objets et les bords orientés sont établis, vérifiés et représentés sur l'affichage, conformément à une logique pouvant être prédéfinie du filtre d'information, la logique pouvant être prédéfinie du filtre d'information n'autorisant que des modèles graphiques des connaissances spécialisées,
- qui comportent au moins deux systèmes, l'un de ces systèmes étant basé sur des connaissances spécialisées relatives à l'environnement et l'autre système étant basé sur des connaissances spécialisées relatives au produit,
qui comportent au moins trois données d'état qui interagissent les unes avec les autres,
- qui sont constitués d'au moins deux relations, l'une des relations comportant respectivement au moins une grandeur d'entrée et une grandeur de sortie et représentant un transfert de matière, d'énergie ou d'information,
le système basé sur des connaissances spécialisées relatives à l'environnement et le système basé sur des connaissances spécialisées relatives au produit étant reliés par des données d'état et leur interaction, et
qui ont une structure unitaire pouvant être prédéfinie ainsi que des terminologies pouvant être interprétées de façon unitaire, sont exempte de contradiction et renferment des informations liées au contexte,
la logique permettant un contrôle continu et par suite, une pondération au moins partielle relative au caractère complet et à l'exactitude des objets et de leurs bords,
lors d'une seconde étape de processus et d'une troisième étape de processus les objets et leurs bords orientés et partiellement pondérés sont représentés sur l'affichage par un graphe non continu, les connaissances spécialisées étant reproduites clairement de façon sensible au contexte et la logique étant utilisée vérifie le caractère complet et l'exactitude,
lors d'une quatrième étape de processus, les objets et leurs bords orientés et partiellement pondérés sont à nouveau représentés sous la forme d'un graphe continu,
celle-ci ne se distinguant de la première étape de processus que par la pondération.

6. Procédé conforme à la revendication 5,
selon lequel il est prévu un affichage des nouvelles connaissances spécialisées pour chaque étape de processus.

7. Procédé conforme à la revendication 6,
**caractérisé en ce que**
les connaissances spécialisées représentées sur l'affichage sont respectivement associées à une étape de processus.

8. Procédé conforme à l'une des revendications précédentes 5 à 7,
**caractérisé en ce que**
les données d'état et les connaissances spécialisées sont représentées dans des modèles graphiques avec des objets et des bords orientés et partiellement pondérés de façon déterminés par une logique.

9. Procédé conforme à l'une des revendications précédentes 5 à 8,
**caractérisé en ce que**
selon l'étape de processus d'autre données d'état importantes pour le contexte sont détectées, une dépendance existant entre les étapes de processus antérieures et postérieures, et l'association d'une étape de processus à l'un des circuits de données étant effectuée conformément à une association des données d'état importantes pour le contexte à l'un des circuits de données.

10. Procédé conforme à l'une des revendications précédentes 5 à 9,
**caractérisé en ce que**
le traitement des données de processus dans les dispositifs de traitement d'information pour chaque étape de processus, avec les connaissances spécialisées enregistrées pour obtenir de nouvelles connaissances spécialisées est effectué au moyen de la logique de traitement de sorte que les données d'état et les connaissances spécialisées enregistrées se distinguent par des dépendances des objets et des bords orientés et également partiellement pondérés.
